# EUROPÄISCHE PATENTANMELDUNG

(11) **EP 0 650 211 A1**
(43) Veröffentlichungstag der Anmeldung: **26.04.1995**
(21) Anmeldenummer: 94116278.6
(22) Anmeldetag: 15.10.1994
(51) Int. Cl.: H01M 10/39

(54) **Elektrochemische Speicherzelle**

(30) Priorität: 23.10.1993 DE 4336236
(71) Anmelder: ABB PATENT GmbH, D-68309 Mannheim (DE)
(72) Erfinder: Lenz, Franz, D-68809 Neulussheim (DE); Steinleitner, Günther, Dr., D-68198 Schriesheim (DE)
(74) Vertreter: Rupprecht, Klaus, Dipl.-Ing.

(57) **Zusammenfassung**

Die Erfindung bezieht sich auf eine elektrochemische Speicherzelle (1), die durch ein metallisches Gehäuse (2) begrenzt ist, und im Inneren einen becherförmigen Festelektrolyten (3) aufweist, der einen Anodenraum (4) von einem Kathodenraum (5) trennt. Der Erfindung liegt die Aufgabe zugrunde, eine elektrochemische Speicherzelle (1) aufzuzeigen, die nach außen hin gasdicht und auslaufsicher verschlossen ist. Erfindungsgemäß ist die Speicherzelle (1) im Bereich ihres Verschlusses (9) mit einer zusätzlichen Abdichtung (14) versehen, die zwei Bauelemente (2B, 11 und 12) aufweist, die sich überlappen, und zwischen denen ein Isolationsring (13) angeordnet ist.

## Beschreibung

Die Erfindung bezieht sich auf eine elektrochemische Speicherzelle gemäß dem Oberbegriff des Patentanspruchs 1.

Solche elektrochemischen Speicherzellen eignen sich sehr gut als Energiequellen. Sie finden in vermehrtem Maß eine Anwendung beim Bau von Hochenergiebatterien, die zur Stromversorgung von Elektrofahrzeugen vorgesehen sind. Ein Beispiel hierfür sind die Speicherzellen auf der Basis von Natrium und Schwefel, die wiederaufladbar sind, und einen Festelektrolyten aus Betaaluminiumoxid besitzen, der den Anodenraum der Speicherzelle vom Kathodenraum trennt. Der Verschluß der Speicherzelle nach außen hin erfolgt durch Dichtungselemente, die überlappend angeordnet sind, und den Anodenraum und den Kathodenraum überdecken. Zwischen den Dichtungselementen ist zusätzlich ein Keramikring aus Alphaaluminiumoxid angeordnet ist, der mit dem Festelektrolyten fest verbunden ist. Die beiden Dichtungselemente sind aus Metall gefertigt. Vorzugsweise wird hierfür ihre Herstellung Aluminium verwendet. Die Dichtungselemente sind mittels Thermokompression mit dem Ring aus Alphaaluminiumoxid dauerhaft verbunden. Nachteilig ist hierbei, daß bei einer Beschädigung dieses Verschlusses Natrium, Schwefel oder Natriumpolysulfid aus der Speicherzelle ausfließen kann. Die Zerstörung des Verschlusses kann beispielsweise durch starke exotherme Reaktionen im Innnern der Speicherzelle oder eine Abtrennung des Ringes aus Alphaaluminiumoxid vom Festelektrolyten hervorgerufen werden. Diese Abtrennung wird durch die Korrosion des Glases hervorgerufen werden, mit dem der Alphaaluminiumoxidring mit dem Festelektrolyten verbunden ist. Fehlerhafte Verbindungen zwischen den metallischen Dichtungselementen und dem Keramikring können ebenfalls die Ursache dafür sein.

Der Erfindung liegt deshalb die Aufgabe zugrunde, eine elektrochemische Speicherzelle mit einem verbesserten Verschluß aufzuzeigen, bei der die Nachteile bekannter Einrichtungen dieser Art ausgeschlossen sind.

Diese Aufgabe wird erfindungsgemäß durch die Merkmale des Patentanspruches 1 gelöst.

Erfindungsgemäß ist der Verschluß der Speicherzelle mit einer zusätzlichen Abdichtung versehen. Diese wird durch zwei sich überlappende Dichtungselemente gebildet, zwischen denen ein Isolationsring aus Keramik angeordnet ist. Das erste Dichtungselement ist mittelbar oder unmittelbar am Gehäuse und das zweite Dichtungselement am stabförmigen Stromkollektor befestigt. Die Dichtungselemente sind als Ringscheiben ausgebildet und mit zylinderförmigen Ansatzelementen zur Befestigung am Gehäuse bzw. am Stromkollektor versehen. Die Abmessungen der beiden Dichtungselemente sind so gewählt, daß der Raum zwischen dem Gehäuses und dem stabförmigen Stromkollektor vollständig überdeckt wird, und durch den Isolationsring zwischen die beiden Dichtungselementen auslaufsicher und gasdicht nach außen verschlossen ist. Bei einer anderen Ausführungsform der Speicherzelle werden die beiden Dichtungselemente durch einen nach innen weisenden Flansch einer am Gehäuse befestigten Verlängerung und einem Dichtungselement gebildete, das ebenfalls am Stromkollektor befestigt ist. Die Länge des Flansches und des Dichtungselementes ist groß so gewählt, daß sich die beiden Bauteile überlappen. In diesem Bereich ist zwischen Flansch und Dichtungselement ebenfalls ein Isolationsring angeordnet und durch Thermokompression mit diesen beiden Bauteilen verbunden. Die Dichtungselemente sind aus Aluminium und die Isolationsringe aus Alphaaluminiumoxid gefertigt. Weitere erfindungswesentliche Merkmale sind in den Unteransprüchen gekennzeichnet.

Die Erfindung wird nachfolgend anhand von schematischen Zeichnungen näher erläutert.

Es zeigen:
Fig. 1 eine erfindungsgemäße Speicherzelle,
Fig. 2 eine Variante der in Fig. 1 gezeigten Speicherzelle

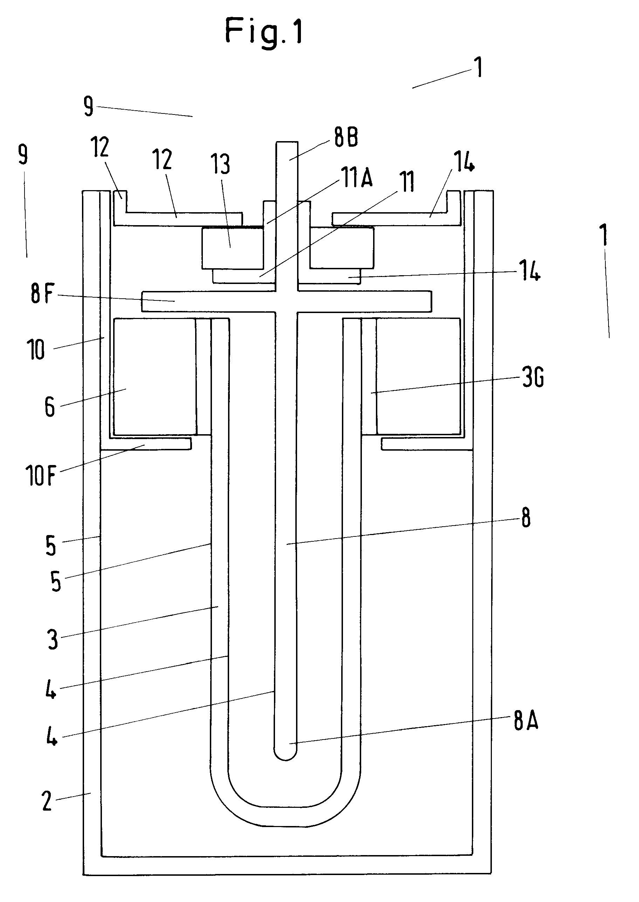

Figur 1 zeigt eine elektrochemische Speicherzelle 1 im Vertikalschnitt. Die Speicherzelle 1 wird nach außen hin durch ein metallisches Gehäuse 2 begrenzt, das aus einem korrosionsbeständigen Material gefertigt ist. Hierfür wird vorzugsweise Aluminium verwendet. Im Inneren der Speicherzelle 1 ist ein becherförmiger Festelektrolyt 3 angeordnet. Sein Innenraum dient als Anodenraum 4. Er enthält ein Alkalimetall, vorzugsweise Natrium. Die Abmessungen des Festelektrolyten 3 sind so gewählt, daß zwischen den Innenflächen des Gehäuses 2 und seinen Außenflächen ein zusammenhängender Ringraum 5 verbleibt, der als Kathodenraum dient. In ihm ist die Schwefelelektrode angeordnet. In den Festelektrolyten 3 ragt ein stabförmiger Stromkollektor 8. Sein erstes Ende 8A ist bis kurz vor das geschlossene Ende des Festelektrolyten 3 geführt. Sein zweites Ende 8B ist aus Speicherzelle 1 herausgeführt, und überragt diese um einige Millimeter. Der Festelektrolyt 3 ist an seinem offenen Ende mit einem nach außen weisenden, als Flansch 6 dienenden Isolationsring versehen. Es handelt sich hierbei um einen Ring aus Alphaaluminiumoxid, der über ein spezielles Glas 3G mit dem äußeren oberen Rand des Festelektrolyten 3 dauerhaft verbunden ist. Dieser Flansch 6 ist auf einem nach innen weisenden Flansch 10F eines Halteelementes 10 abgestützt und dauerhaft mit diesem verbunden. Das Halteelement 10 ist zylinderförmig ausgebildet und aus einem korrosionsbeständigen Material, vorzugsweise aus Aluminium gefertigt ist. Die Abmessungen dieses zylinderförmigen Halteelementes 10 sind an den Innendurchmesser des Gehäuses 2 angepaßt. Das Halteelement 10 ist im Inneren des Gehäuses 2 angeordnet und dauerhaft mit den Innenflächen des Gehäuses 2 verbunden. Vorzugsweise wird das Halteelement 10 mit den Innenflächen des Gehäuses verschweißt. Die Abmessungen des Isolationsringes 6 sind so gewählt, daß hierdurch der Kathodenraum 5 vollständig überdeckt wird. Auf der Oberfläche des Isolationsringes 6 ist ein an dem stabförmigen Stromkollektor 8 ausgebildeter Flansch 8F aufgesetzt und dauerhaft mit dem Isolationsring 6 verbunden. Etwa 0,5 cm oberhalb des Flansches 8F ist ein Dichtungselement 11 angeordnet. Es ist als Ringscheibe ausgebildet, und mit einem zylinderförmiger Ansatz 11A versehen, das den stabförmigen Stromkollektor 8 bereichsweise umschließt und dauerhaft daran befestigt ist. Ein weiteres, als Ringscheibe ausgebildetes Dichtungselement 12 ist im Abstand von etwa 1,0cm oberhalb des Dichtungselementes 11 angeordnet. Auch dieses Dichtungselement 12 weist einen zylinderförmigen Ansatz 12A auf, und ist damit dauerhaft an den Innenflächen des Halteelementes 10 befestigt. Vorzugsweise werden die Dichtungselemente 11 und 12 an dem stabförmigen Stromkollektor 8 bzw. an dem Halteelement 10 festgeschweißt. Die Abmessungen der beiden Dichtungselemente 11 und 12 sind so gewählt, daß sie sich bereichsweise überlappen. In diesem Bereich ist ein Isolationsring 13 zwischen den Dichtungselementen 11 und 12 angeordnet, der aus Alphaaluminiumoxid gefertigt ist. Sein Durchmesser ist etwas größer als die Breite des Bereiches in dem sich die beiden Bauelemente 11 und 12 überlappen. Sein Durchmesser kann jedoch auch dem des Isolationsringes 6 entsprechen. Die beiden Dichtungselemente 11 und 12 sind vorzugsweise mittels Thermokompression dauerhaft mit dem Isolationsring 13 verbunden. Durch die beiden Dichtungselemente 11 und 12 und den Isololationsring 13 wird der Innenraum der Speicherzelle 1 zusätzlich abgedichtet, so daß weder gasförmige noch flüssige Reaktanden austreten können.

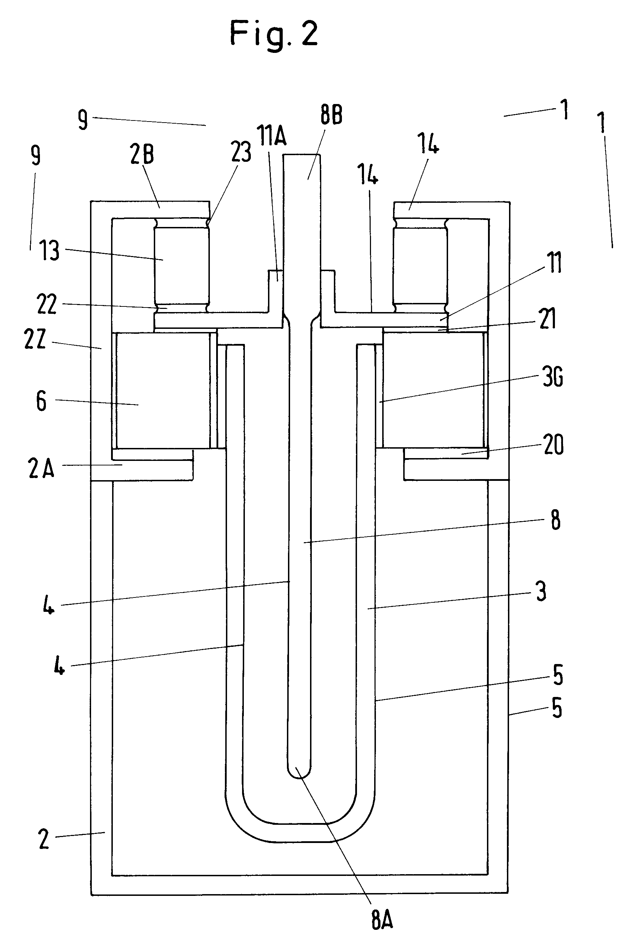

Figur 2 zeigt eine Variante der in Figur 1 dargestellten Speicherzelle. Gleiche Bauteile sind mit gleichen Bezugszeichen versehen. Wie anhand von Figur 2 zu sehen ist, ist das Gehäuse 2 im Bereich seines offenen Endes mit einer zylinderförmigen Verlängerung 2Z versehen, die am ersten und zweiten Ende mit jeweils einem nach innen weisenden und rundum geführten Flansch 2A und 2B versehen ist. Die Verlängerung 2Z ist dauerhaft mit dem Gehäuse 2 verbunden, und weist den gleichen Innendurchmesser und die gleiche Wandstärke wie selbiges auf. Auf dem ersten Flansch 2A der Verlängerung 2Z ist der aus Alphaaluminiumoxid gefertigte Isolationsring 6 aufgesetzt. Er ist über ein Glas 3G an der Außenfläche des Festelektrolyten 3 befestigt. Zusätzlich ist er über eine Ringscheibe 20 aus Aluminium mit dem Flansch 2A durch Thermokompression verbunden. Die Abmessungen des Isolationsring 6 sind auch hierbei so gewählt, daß der unterhalb des Flansches 2A beginnende Kathodenraum 5 hierdurch vollständig überdeckt wird. Auf der Oberfläche des Isolationsringes 6 ist ein Halteelement 11 angeordnet. Eine Ringscheibe 21 aus Aluminium 21 ist zusätzlich zwischen dem Isolationsring 6 und dem Halteelement 11 angeordnet. Das Halteelement 11 ist als Ringscheibe ausgebildet und weist einen zylinderförmigen Ansatz 11A auf. Dieser umgibt die Außenfläche des Stromkollektors 8 bereichsweise, und ist dauerhaft mit diesem verbunden. Der Stromkollektor 8 kann zu Verbesserung der Stabilität hierfür am zweiten Ende 8B auch etwas breiter ausgebildet werden, wie es in Figur 2 dargestellt ist. Die Länge des Halteelementes 11 ist so gewählt, daß sich der zweite Flansch 2B der Verlängerung 2Z und das Halteelemente 11 überlappen. Zwischen dem Flansch 2B und dem Halteelement 11 ist ein weiterer Isolationsring 13 angeordnet, der dauerhaft mittels Thermokompression mit den beiden Bauelementen 11 und 13 verbunden ist. Zu diesem Zweck ist zwischen dem Isolationsring 13 und dem Halteelement 11 sowie dem Isolationsring 13 und dem Flansch 2B jeweils eine Ringscheibe aus Aluminium 22 bzw. 23 angeordnet, welche eine Verbindung der Bauelemente 2B, 11 und 13 mittels Thermokompression ermöglichen. Der Durchmesser des Isolationsrings 13 ist etwas breiter ausgebildet als der Bereich in dem sich die Bauelemente 2B und 11 überlappen. Er kann jedoch auch an den Durchmesser des Isolationsringes 6 angepaßt werden. Durch die obenbeschriebenen Maßnahmen sind die beiden Isolationsringe 6 und 13 starr miteinander verbunden. Dieser Verschluß 9 der Speicherzelle 1 kann in einem Arbeitsgang hergestellt werden. Im Gegensatz dazu sind die in Figur 1 dargestellten Isolationsringe 6 und 13 thermisch und kräftemäßig voneinander entkoppelt.

## Patentansprüche

1. Elektrochemische Speicherzelle (1) auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse (2) begrenzt sind, wobei der Verschluß (9) der Speicherzelle (1) ein mit dem Gehäuse (2) verbundenes Halteelement (10) aufweist, an dem ein am Festelektrolyten (3) befestigter Isolationsring (6) gehaltert ist, **dadurch gekennzeichnet,** daß der Verschluß (9) der Speicherzelle (1) mit einer zusätzlichen Abdichtung (14) versehen ist.

2. Elektrochemische Speicherzelle nach Anspruch 1, dadurch gekennzeichnet, daß die zusätzliche Abdichtung (14) zwei sich überlappende Dichtungselemente (11 und 12) aufweist, zwischen denen ein Isolationsring (13) angeordnet ist.

3. Elektrochemische Speicherzelle nach einem der Ansprüche 1 oder 2, dadurch gekennzeichnet, daß das erste Dichtungselement (11) an einem in den Festelektrolyten (3) hineinragenden stabförmigen Stromkollektor (8) und das zweite Dichtungselement (12) mittelbar oder unmittelbar am Gehäuse (2) befestigt ist.

4. Elektrochemische Speicherzelle nach einem der Ansprüche 1 bis 3, dadurch gekennzeichnet, daß beide Dichtungselemente (11 und 12) als Ringscheiben ausgebildet und zur Befestigung am Stromkollektor (8) bzw. am Gehäuse (2) mit jeweils einem zylinderförmigen Ansatz (11A, 12A) versehen sind.

5. Elektrochemische Speicherzelle nach einem der Ansprüche 1 bis 4, dadurch gekennzeichnet, daß die Abmessungen der beiden Dichtungselemente (11 und 12) so gewählt sind, daß der Raum zwischen dem stabförmigen Stromkollektor (8) und dem Gehäuse (2) vollständig überdeckt ist.

6. Elektrochemische Speicherzelle nach einem der Ansprüche 1 bis 5, dadurch gekennzeichnet, daß der zylinderförmige Ansatz (11A) des Dichtungselementes (11) die Außenfläche des stabförmigen Stromkollektors (8) bereichsweise umschließt und dauerhaft damit verbunden ist.

7. Elektrochemische Speicherzelle nach einem der Ansprüche 1 bis 6, dadurch gekennzeichnet, daß der zylinderförmige Ansatz (12A) des Dichtungselementes (12) dauerhaft an der Innenfläche des Halteelementes (10) befestigt ist.

8. Elektrochemische Speicherzelle nach einem der Ansprüche 1 bis 7, dadurch gekennzeichnet, daß zwischen den beiden Dichtungselementen (11 und 12) ein Isolationsring (13) aus Alphaaluminiumoxid angeordnet und gasdicht mit den beiden Dichtungselementen (11 und 12) verbunden ist.

9. Elektrochemische Speicherzelle nach einem der Ansprüche 1 bis 8, dadurch gekennzeichnet, daß der am Festelektrolyten (3) befestigte Isolationsring (6) einen Durchmesser aufweist, der gleich oder größer ist als der Durchmesser des zweiten Isolationsrings (13).

10. Elektrochemische Speicherzelle nach einem der Ansprüche 1 bis 9 , dadurch gekennzeichnet, daß die zusätzliche Abdichtung (14) ein erstes als Flansch (2B) ausgebildetes und ein zweites als Ringscheibe (11) ausbebildetes am Stromkollektor (8) befestigtes Dichtungselement aufweist, die sich bereichsweise überlappen, und zwischen denen ein Isolationsring (13) angeordnet.

11. Elektrochemische Speicherzelle nach Anspruch 1 oder 10, dadurch gekennzeichnet, daß der in das Gehäuse (2) weisende Flansch (2B) sich am zweiten Ende einer zylinderförmigen Verlängerung (2Z) des Gehäuses (2) befindet, an deren erstem Ende ebenfalls ein in das Gehäuse (2) weisender Flansch (2A) angeordnet ist.

12. Elektrochemische Speicherzelle nach Anspruch 1 sowie 10 und 11, dadurch gekennzeichnet, daß das Halteelement (11) einen zylindrischen Ansatz (11A) aufweist, der die Außenfläche des Stromkollektors (8) bereichsweise umgibt und daran befestigt ist.

13. Elektrochemische Speicherzelle nach Anspruch 1 sowie 10 bis 12, dadurch gekennzeichnet, daß zwischen dem Flansch (2B) und dem Halteelement (11) unter Zwischenfügen jeweils einer Ringscheibe (22 und 23) aus Aluminium ein Isolationsring (13) aus Alphaaluminiumoxid angeordnet und durch Thermokompression mit dem Flansch (2B) und dem Halteelement (11) dauerhaft verbunden ist.

14. Elektrochemische Speicherzelle nach Anspruch 1 sowie 10 bis 13, dadurch gekennzeichnet, daß der Isolationsring (6) durch Zwischenfügen jeweils einer Ringscheibe (20 und 21) aus Aluminium durch Thermokompression mit dem Flansch (2A) der Verlängerung (2Z) und dem Halteelemente (11) dauerhaft verbunden ist.

15. Elektrochemische Speicherzelle nach einem der Ansprüche 1, sowie 10 bis 14, dadurch gekennzeichnet, daß der Isolationsring (6) bis zur Innenfläche der zylindrischen Verlängerung (2Z) reicht, und daß der Isolationsring (13) schmaler oder so breit wie der Isolationsring (6) ausgebildet ist.
